(19) **Europäisches Patentamt**
**European Patent Office**
**Office européen des brevets**

(11) **EP 2 076 047 B1**

(12) **EUROPEAN PATENT SPECIFICATION**

(45) Date of publication and mention
of the grant of the patent:
**21.11.2018 Bulletin 2018/47**

(51) Int Cl.:
*H04N 19/139* (2014.01)     *H04N 19/176* (2014.01)
*H04N 19/119* (2014.01)     *H04N 19/147* (2014.01)
*H04N 19/63* (2014.01)      *H04N 19/109* (2014.01)
*H04N 19/162* (2014.01)     *H04N 19/19* (2014.01)

(21) Application number: **08254172.3**

(22) Date of filing: **29.12.2008**

(54) **Video motion estimation**

Videobewegungsschätzung

Évaluation de mouvement vidéo

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.12.2007 US 6250**

(43) Date of publication of application:
**01.07.2009 Bulletin 2009/27**

(73) Proprietor: **Intel Corporation**
**Santa Clara, CA 95054 (US)**

(72) Inventors:
• **Jiang, Hong**
**El Dorado Hills, CA 95762 (US)**
• **Rauchfuss, Brian**
**Rancho Cordova, CA 95670 (US)**
• **Lu, Ning**
**Folsom, CA 95630 (US)**
• **Wong, Samuel**
**San Jose, CA 95164 (US)**

(74) Representative: **Maiwald Patent- und Rechtsanwaltsgesellschaft mbH**
**Elisenhof**
**Elisenstraße 3**
**80335 München (DE)**

(56) References cited:
**US-A- 6 084 908          US-A1- 2005 114 093**
**US-A1- 2007 064 810**

• **"Anticipatory Joint Model (JM) of Enhanced-Compression Video Coding", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. N4355, 21 July 2001 (2001-07-21), XP030011969,**
• **S.ADACHI, S.KATO,H.SCHWARZ, T.WIEGAND, S.SEKUUCHI, Y.YAMADA, S.KADONO AND M.HAGAI: "Core Experiments Description on Improved Macroblock prediction modes", ITU-T SG16 Q6, VCEG-O61, 4 December 2001 (2001-12-04), XP040417865,**
• **MINHUA ZHOU ET AL: "Modified Universal Length Coding", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. VCEG-N36, 21 September 2001 (2001-09-21), XP030003286,**
• **STEVE CALZONE ET AL: "Video Compression by Mean-Corrected Motion Compensation of Partial Quadtrees", IEEE TRANSACTIONS ON CIRCUITS AND SYSTEMS FOR VIDEO TECHNOLOGY, IEEE SERVICE CENTER, PISCATAWAY, NJ, US, vol. 7, no. 1, 1 February 1997 (1997-02-01), XP011014342, ISSN: 1051-8215**

**Description**

Background

This relates to digital video image coding, and, in particular, to motion estimation for encoding video image data.

In order to transmit video images over narrow bandwidth channels and/or store video images efficiently, digital video data is preferably coded using known methods of compression. For example, to display real time motion video on personal computer systems having limited available memory and processing time, the digital image data is preferably encoded utilizing as much of the redundancy in sequences of image frames as possible. For example, successive images in a sequence are visually similar. One way to take advantage of this redundancy is to encode video images using motion estimation. In motion estimation, an image encoder generates motion vectors that indicate the relative movements of different regions from one image frame to form an approximation to various regions in the next image frame.

Video images that are encoded using motion estimation are decoded using motion compensation. In motion compensation, an image decoder approximates an image frame by moving different regions of the previous image frame according to the motion vectors generated by an encoder during motion estimation.

In conventional motion estimation, an image frame n is divided into rectangular or square sub-images called blocks. Each block of image frame n is then compared to the previous image frame n - 1 to attempt to identify a region in the previous image frame n - 1 that corresponds to that block of image frame n. A motion vector is then generated for each block of image frame n that has an identified corresponding region in image frame n - 1. The motion vector indicates the relative vector distance between the block of image frame n and the corresponding region of image frame n - 1.

Prior art forms e.g. "Anticipatory Joint Model (JM) of Enhanced-Compression Video Coding", ITU STUDY GROUP 16 - VIDEO CODING EXPERTS GROUP - ISO/IEC MPEG & ITU-T VCEG (ISO/IEC JTC1/SCZQ/NG11 AND ITU-T SG16 Q6) and S.ADACHI, S.KATO, H.SCHNARZ, T.NIEGAND, S.SEKUUCHI, Y.YAMADA, S.KADONO AND M.HAGAI: "Core Experiments Description on Improved Macroblock prediction modes", ITU-T SG16 Q6, VCEG- 061, where motion vectors are derived for each possible partion of a 16x16 block, prior to derive the coding mode of the 16x16 block using rate distortion optimisation. This document however fails to disclose a hierachical organisation and selection of partitionings for deriving the coding mode under the constraint of the number of motion vectors.

Brief Description of the Drawings

Figure 1 is a block diagram of an encoder according to one embodiment;
Figure 2 is a hardware implementation of a distortion calculator in accordance with one embodiment;
Figure 3 is a hardware implementation of a motion estimator with a maximum motion vector number limitation;
Figure 4 is a sample piece-wise linear curve; and
Figure 5 is a system depiction for one embodiment.

Detailed Description

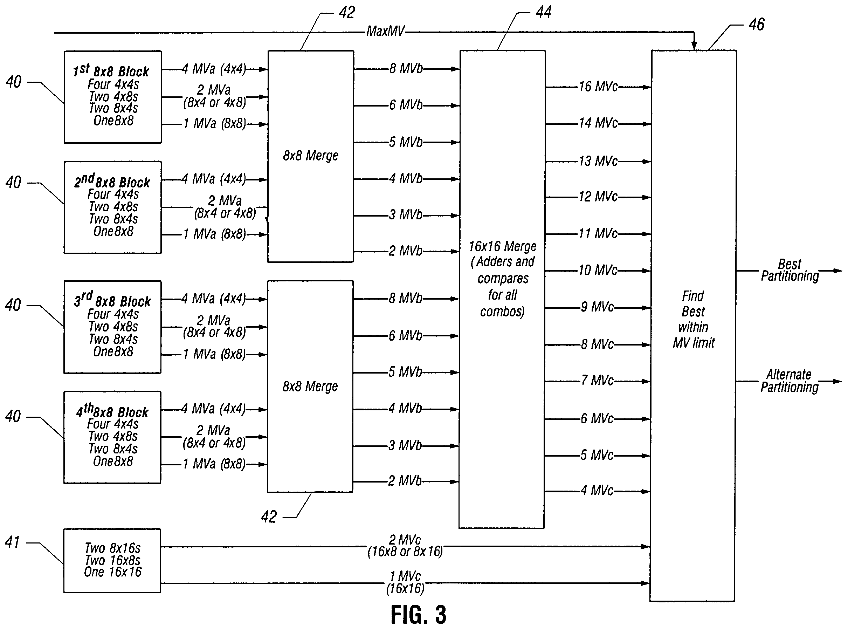

The present invention is defined in the independent claims. Enabling disclosure for the invention is found in the embodiment of Figure 3. The remaining embodiments are to be understood as examples which do not describe parts of the present invention.

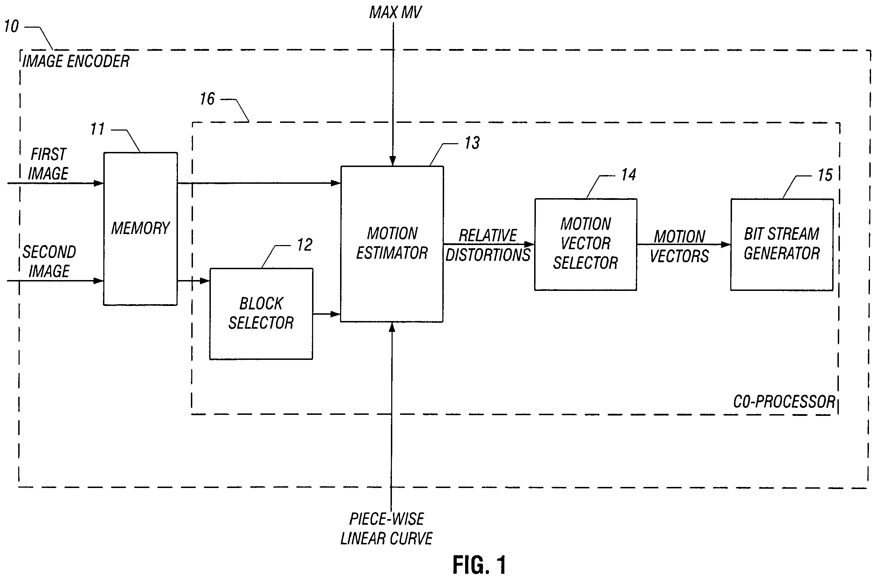

Referring to Figure 1, there is shown a block diagram of image encoder 10, according to one embodiment. Image encoder 10 receives the first and second images and generates motion vectors used to encode the second image. In particular, memory 11 of image encoder 10 receives the first and second images. Block selector 12 selects blocks of the second image, and motion estimator 13 compares the selected blocks to the first image to identify regions of the first image that correspond to the selected blocks of the second image. Motion vector selector 14 uses the relative distortions between corresponding blocks of the first and second images to select motion vectors with minimal weighted amount of distortions and bit-cost of describing these motion vectors that are used by bit stream generator 15 to encode the second image. In one embodiment, block selector 12, motion estimator 13, motion vector selector 14, and bit stream generator 15 are implemented in a co-processor 16.

Motion estimation involves the core full pixel motion searching process, also called integer motion search, a half pixel or quarter pixel refinement and bidirectional refinement, intra prediction as alternatives when no better motion prediction can be found, and a mechanism for selecting motion vectors.

The distortion of a motion vector is the discrepancy between the original pixels and their corresponding reference pixels in an area covered by the motion vectors using a predefined metric. The most commonly used metrics are the sum of absolute difference (SAD) and mean square error (MSE).

In video compression, pixel values are commonly stored in the frequency domain after standard discrete cosine transformation (DCT) or some variation of DCT transforms. Measuring distortion directly in the frequency domain may give a better compression result. However, it may be computationally expensive. By using an Haar based wavelet transform, not covered by the claims, a distortion metric may be calculated which is less computationally expensive. Further, through simplifications of the Haar based wavelet transform, computation may be further simplified and hardware may be used to do the distortion determination.

The Haar transform can apply to any number of entries in the power of two. In fact, starting from any sequence of 2N entries $\{x_0, x_1, ..., x_{2N-1}\}$, a one 1-dimensional Haar transform step converts data sequences into two sequences of length N:

a low frequency sequence: $\left\{\dfrac{\sqrt{2}}{2}(x_0 + x_1), \dfrac{\sqrt{2}}{2}(x_2 + x_3), \cdots, \dfrac{\sqrt{2}}{2}(x_{2N-2} + x_{2N-1})\right\}$, and

a high frequency sequence: $\left\{\dfrac{\sqrt{2}}{2}(x_0 - x_1), \dfrac{\sqrt{2}}{2}(x_2 - x_3), \cdots, \dfrac{\sqrt{2}}{2}(x_{2N-2} - x_{2N-1})\right\}$. The Haar wavelet transform, according to one embodiment, is obtained by repeatedly applying the 1-dimensional Haar transform step to the low frequency sequences until only one entry remains.

To apply the Haar wavelet to an image block, a 2-dimensional Haar transform may be modified by applying 1-dimensional steps horizontally and vertically alternately. Assuming a image block $\{p(x,y)\}_{0 \leq x < 2^n, 0 \leq y < 2^m}$, a standard 2-dimensional Haar wavelet transform may be applied to the image block $2^n \times 2^m$.

In a first step, the horizontal Haar transform may be applied to every row to generate two blocks of $2^{n-1} \times 2^m$:

$$\left\{p^L(x, y)\right\}_{0 \leq x < 2^{n-1}, 0 \leq y < 2^m} \text{ and } \left\{p^H(x, y)\right\}_{0 \leq x < 2^{n-1}, 0 \leq y < 2^m}$$

Where $p^L$ is the lowest frequency components and $p^H$ is the highest frequency components. Then a vertical Haar transform may be applied to every row of both $2^{n-1} \times 2^m$ blocks to have four $2^{n-1} \times 2^{m-1}$ blocks:

$$\left\{p^{LL}(x, y)\right\}_{0 \leq x < 2^{n-1}, 0 \leq y < 2^{m-1}}, \left\{p^{HL}(x, y)\right\}_{0 \leq x < 2^{n-1}, 0 \leq y < 2^{m-1}},$$

$$\left\{p^{LH}(x, y)\right\}_{0 \leq x < 2^{n-1}, 0 \leq y < 2^{m-1}}, \text{ and } \left\{p^{HH}(x, y)\right\}_{0 \leq x < 2^{n-1}, 0 \leq y < 2^{m-1}}.$$

Where $p^{LL}$ are the lowest frequency components, $p^{HH}$ are the highest frequency components, and $p^{HL}$ and $p^{LH}$ are intermediate frequency components. Finally, the above steps are repeatedly applied to $\{p^{LL}(x,y)\}_{0 \leq x 2_{n-1}, 0 \leq y < 2_{m-1}}$.

Equivalently, the following pseudo codes may be used:

```
void Haar4x4TransformMethod1 (int Block[4][4], int Haar[4][4])
{
/First level 4-element horizontal Haar for 4 rows
For(int j=0;j<4;j++) {
   temp[j][3] = (Block[j][2]-Block[j][3]);
    temp[j][2] = (Block[j][0]-Block[j][1]);
   temp[j][1] = (Block[j][2]+Block[j][3]);
   temp[j][0] = (Block[j][0]+Block[j][1]);
}
//First level 4-element vertical Haar for 2 columns
For(int i=0;i<2;i++) {
   Haar[3][i] = (temp[2][i]-temp[3][i])/2;
   Haar[2][i] = (temp[0][i]-temp[1][i])/2;
   Haar[1][i] = (temp[2][i]+temp[3][i])/2;
   Haar[0][i] = (temp[0][i]+temp[1][i])/2;
}
//Second level 2-element horizontal Haar for 2 rows
```

```
     temp[1][1] = (Haar[1][0]-Haar[1][1]);
     temp[0][1] = (Haar[0][0]-Haar[0][1]);
     temp[1][0] = (Haar[1][0]+Haar[1][1]);
     temp[0][0] = (Haar[0][0]+Haar[0][1]);
 //Second level 2-element vertical Haar for 1 column
     Haar[1][1] = (temp[0][1]-temp[1][1])/2;
     Haar[0][1] = (temp[0][1]+temp[1][1])/2;
     Haar[1][0] = (temp[0][0]-temp[1][0])/2;
     Haar[0][0] = (temp[0][0]+temp[1][0])/2;
 }
     void Haar4x4TransformMethod2(int Block[4][4], int Haar[4][4])
     {
 /First level 4-element horizontal Haar for 4 rows
 For(int j=0;j<4;j++) {
     Haar [j][3] = (Block[j][2]-Block[j][3])*HALFSQRT2;
     Haar [j][2] = (Block[j][0]-Block[j][1])*HALFSQRT2;
     Block[j][1] = (Block[j][2]+Block[j][3]);
     Block[j][0] = (Block[j][0]+Block[j][1]);
 }
 //First level 4-element vertical Haar for 2 columns
 For(int i=0;i<2;i++) {
     Haar [3][i] = (Block[2][i]-Block[3][i])/2;
     Haar [2][i] = (Block[0][i]-Block[1][i])/2;
     Block[1][i] = (Block[2][i]+Block[3][i])/2;
     Block[0][i] = (Block[0][i]+Block[l][i])/2;
 }
 //Second level 2-element horizontal Haar for 2 rows
 Haar [1][1] = (Block[1][0]-Block[1][1])*HALFSQRT2;
 Haar [0][1] = (Block[0][0]-Block[0][1])*HALFSQRT2;
 Block[1][0] = (Block[1][0]+Block[0][1]);
 Block[0][0] = (Block[0][0]+Block[0][1]);
 //Second level 2-element vertical Haar for 1 column
 Haar [1][0] = (Block[0][0]-Block[1][0])/2;
 Haar [0][0] = (Block[0][0]+Block[1][0])/2;
 }
```

In some embodiments, this method has less computation, compared to the unmodified Haar wavelet, and the need for normalization of $\sqrt{2}$ is avoided.

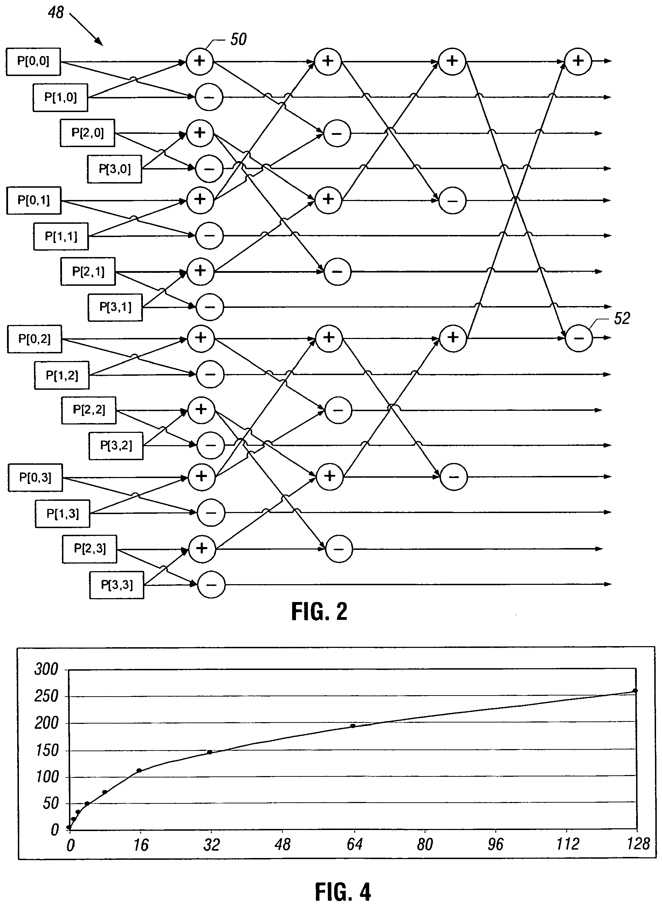

In accordance with one embodiment, the modified Haar transform may be implemented with the hardware 48, shown in Figure 2, which may be part of the motion estimator 13 (Figure 1) in accordance with one embodiment. An array of adders 50 and subtractors 52 may receive inputs from, in one embodiment, a 4x4 array of pixels p[0,0], p[1,0], p[2,0] ... p[2,3], and p[3,3]. The calculation may be simplified relative to a conventional Haar transform in the elimination of the application of the factors of a square root of two over two and the limitation to the lower frequency components.

In video compression, prediction codes may be used instead of sending or storing the actual pixel data. For example, given two prediction codes for the same image portion, it would be desirable to use the prediction codes with less prediction distortion, if the cost of using the codes is either not an issue or is the same. The cost of using the codes is the number of bits that it takes to achieve that level of distortion. Generally, the better the distortion, the more bits that are needed to achieve it and the more overhead that may be involved in achieving the improved distortion. The overhead may result in the need for higher bandwidth transport or the inability to transport data at relatively high speeds.

Adjusted distortion is the sum of the distortion and the adjusted costing. The adjusted costing is the number of bits used to code the motion vector, multiplied by a factor called the quality parameter. The quality parameter $\lambda$ may be determined by the particular compression scheme utilized. It indicates how much distortion will be tolerated. It can be chosen based on what distortion can be tolerated and what costs may be tolerated. The larger the $\lambda$, the larger the blocks that may be chosen for motion estimation, resulting in less cost. The smaller the $\lambda$, the smaller the blocks, but the higher the cost in terms of the number of bits. The number of bits that are required to code for a given distortion is called the code cost or the code penalty.

The adjusted distortion or code cost may be determined using hardware in one embodiment. In some embodiments of the present invention, the code cost is calculated, at each analyzed location, in hardware. This may be accomplished using a piece-wise linear curve (Figure 4) to determine cost as indicated in Figure 1. In one embodiment, eight locations on a frame may be chosen from among all the possible locations. Those eight locations are chosen because they give the least distortion and those are used to determine the piece-wise linear curve. While, in one embodiment, eight locations are utilized, the general idea is to use less than all the available locations and to choose a finite number of locations that have the best adjusted distortion.

In one embodiment, the piece-wise linear curve, as shown in Figure 4, may be a logarithmic curve. The curve is graphed with a penalty measure on the vertical axis, while the horizontal axis gives the number of bits. The curve tells how much distortion can be tolerated to avoid extra cost.

In some embodiments, the piece-wise linear curve may be supplied by the user as indicated in Figure 1. In other words, the user provides the system with the information it needs to make the tradeoff between higher distortion and lower cost. The system 10 can then effectively apply this curve to make the determination in each location of how much distortion can be tolerated.

Motion vectors may be stored relative to predicted motion vectors in horizontal and vertical components. The closer to the predicted motion vector, the less bits that are required to encode. The user can specify the prediction center and the costing penalty curve for adjusted distortion calculation. The prediction center is a pair of coordinates in a quarter pixel unit.

To simplify the penalty curve description, only eight key costing penalties at power of two locations in a quarter pixel unit are used. The eight locations are LUT_MV[8]:
0, 1, 2, 4, 8, 16, 32, and 64.
So the motion vector coordinate costing is defined to be:

$$\mathrm{Costing}(v) = \mathrm{LUT\_MV}[0], \text{ if } v = 0;$$

$$\mathrm{Costing}(v) = \mathrm{LUT\_MV}[p+1], \text{ if } |v| = 2^p, \text{ for any } p \le 6;.$$

$$\mathrm{Costing}(v) = \mathrm{LUT\_MV}[p+1] + ((\mathrm{LUT\_MV}[p+1] - \mathrm{LUT\_MV}[p+2]) * k) >> p,$$
$$\text{if } |v| = 2^p + k, \text{ for any } p < 6 \text{ and } k < 2^p,$$

$$\mathrm{Costing}(v) = \mathrm{LUT\_MV}[7] + |v| - 64, \text{ if } dx > 64. \text{ [Ning: What are z and dx?]}$$

And the total costing penalty for a motion vector mv is defined to be the sum of the horizontal and vertical components:

$$\mathrm{Costing}(mv) = \mathrm{Costing}(mv.x - pred.x) + \mathrm{Costing}(mv.y - pred.y).$$

For further simplification, each costing penalty is stored in eight bits of two units of four bits each: *base* and *shift.* The costing value is specified as (*base<<shft*).

In addition to motion vector coding, the coding of macroblock partitioning types and modes may be covered by another set of mode lookup tables that specify the additional cost or penalties of using partitioning types and modes in one embodiment.

More than one set of lookup tables may simulate the potential quality variations needed to adjust macroblock level video qualities. To reduce the size of lookup tables, a fixed pattern with an updatable multiplier can be used and the size of lookup tables for motion vector components can also be limited to a small set of values near zero. The out-of-range motion vector costing can be assumed to follow a predefined linear pattern.

Thus, in some embodiments, distortion may be determined after transforming the data to the frequency domain and the distortion calculation may be done in hardware, using a modified Haar wavelet transform. The modified Haar wavelet transform may apply to the low frequency parts, while ignoring the higher frequency components to simplify the calculation and to make the calculation more suitable to a hardware implementation.

In one embodiment, the above techniques for determining distortion and adjusted distortion can be applied in systems where the maximum number of motion vectors may be limited. For example, some standards may be control the number of motion vectors. The issue then becomes how can one achieve the lowest possible distortion, given the constraint of a maximum number of motion vectors. For example, the Advanced Video Coding(AVC) (H.264) high profiles specify a maximum number of motion vectors. See MPEG-4 Part 10, ITU-T Video Coding Experts Group, International Telecommunications Union, Telecommunications Standardization Sector, Geneva, Switzerland.

Referring to Figure 3, a 16x16 source block can be undivided (*i.e.* one single motion vector for the entire block), divided into two 16x8 blocks, divided into two 8x16 blocks, (the above three cases are described in block 41), or further divided into four 8x8 sub-blocks or even smaller. For each of four individual 8x8 blocks 40, one of two motion vector choices may be eliminated. Either the two 8x4 or two 4x8's may be eliminated based on the minimal overall adjusted distortion determined, for example, as described above. Three choices are then output as one motion vector a, which is an 8x8 motion vector, two motion vectors a, which are 8x4's or 4x8's, and four motion vectors a, which are 4x4's.

Then, in block 42, the first 8x8 block's three choices and the second 8x8 block's three choices are combined into six pairs. One motion vector a and another motion vector a are chosen for two motion vectors b. One of one motion vector a and two motion vector a's are chosen and one of two motion vector a's and one motion vector a are chosen for three motion vector b's. Next, the two motion vector a's and two motion vector a's are chosen for four motion vector b's. Then a selection is made between (one motion vector a and four motion vector a's) and (four motion vector a's and one motion vector a) for five motion vector b's. Then, one of (two motion vector a's and four motion vector a's) or (four motion vector a's and two motion vector a's) are chosen for six motion vector b's. Finally, four motion vector a's and four motion vector a's are chosen for eight motion vector b's.

The third 8x8 block 40's three choices and the fourth 8x8 block 40's three choices are combined into six pairs similarly using another 8x8 merge 42.

In block 44, the two previous groups are compared as twelve candidates. One 16x16 block is chosen for one motion vector c. One of two 16x8 or two 8x16 blocks are chosen for two motion vector c's. Two motion vector b's from the top group and two motion vector b's from the bottom group are chosen for four motion vector c's. As a notation, we say 4MVc is derived by combining (2, 2)MVb. Similarly, for five motion vector case, we merge (2,3)MVb (i.e. two motion vector b's from the top group and three motion vector b's from the bottom group) and (3,2)MVs (three motion vector b's from the top group and two motion vector b's from the bottom group) to generate five motion vector c's, 5MVc. One of the group of two motion vector b's and four motion vector b's (2,4)MVb or the group of four motion vector b's and two motion vector b's (4,2)MVb or the group of three motion vector b's and three motion vector b's (3,3)MVb are chosen for six motion vector c's, 6MVc. Analogously, one of the best among (2,5) motion vector b's, (5,2) motion vector b's, (3,4) motion vector b's and (4,3) motion vector b's are chosen for seven motion vector c's. One of (2,6) motion vector b's (6,2) motion vector b's, (3,5) motion vector b's, (5,3) motion vector b's, and (4,4) motion vector b's are chosen for eight motion vector c's. One of (3,6) motion vector b's, (6,3) motion vector b's, (4,5) motion vector b's, or (5,4) motion vector b's are chosen for nine motion vector c's. Then, one of (2,8) motion vector b's, (8,2) motion vector b's, (4,6) motion vector b's, (6,4) motion vector b's, or (5,5) motion vector b's are chosen for ten motion vector c's. Then, one of (3,8) motion vector b's, (8,3) motion vector b's, (5,6) motion vector b's, or (6,5) motion vector b's are chosen for eleven motion vectors. Thereafter, one of (4,8) motion vector b's, (8,4) motion vector b's, and (6,6) motion vector b's are chosen for twelve motion vectors. One of (5,8) motion vector b's and (8,5) motion vector b's are chosen for thirteen motion vector c's. One (6,8) motion vector b's and (8,6) motion vector b's are chosen for fourteen motion vector c's. Finally, an 8 motion vector b and 8 motion vector b are chosen for sixteen motion vector c's.

In the next step, the best motion vector c's are chosen at block 46 with the number of motion vector chosen being less than the specified maximum motion vector number.

In some embodiments, to ensure that the best choice is chosen, it may be desirable to select more than one result. There may be many ways to pick multiple candidates. Among the ways include picking additional results from some predefined distortion tolerance. Then, all the results that are picked have an adjusted distortion that is not worse than the tolerance T from the best result.

As another alternative, more than one, but a fixed number of best results can be chosen. As still another possibility, the last 14 results can be split into k disjoint groups and k-1 additional results may be picked such that there is always one from each group. For example, the results may be split into three groups. One group contains only one motion vector c and two motion vector c's and the other contains all the other results.

In some cases, the above three techniques may be used together. For example, if method one and method two are combined, this results in extra results only for ones whose distortion is within the tolerance.

The process just described is normally performed after an integer pixel motion search, fractional motion search, and bidirectional search for all possible candidate sub-blocks. Commonly, 41 sub-blocks of the 6x16 macroblock where there is one 16x16, two 16x8's, two 8x16's, four 8x8's, eight 8x4's, eight 4x8's, and sixteen 4x4 blocks. However, the number of sub-blocks may vary according to the allowed sub-partitioning. For example, to be reduced to 25 is 8x4's and 4x8s are not allowed or it may be increased if more partitioning is allowed as in a field mode or in a smaller block size or in a regular shape.

However, for reduced computation and power saving, the macroblock partitioning may be performed earlier, either after fractional search or right after integer search. The later refinement steps can apply only to the sub-blocks that are involved in the best chosen partition.

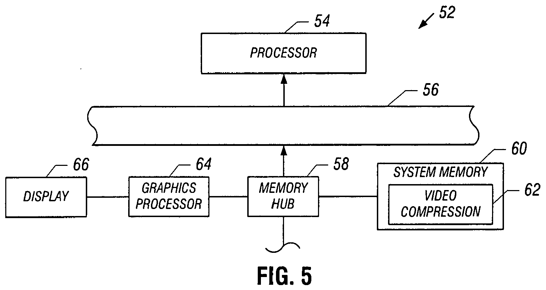

Referring to Figure 5, in one embodiment, a computer system 52 may include the image encoder 10 shown in Figure 1. The computer system 52, in one embodiment, may include at least one processor 54 coupled by a bus 56 to a memory hub 58. The memory hub may be coupled to system memory 60 that includes a video compression storage 62 in one embodiment. The memory hub 58 may also be coupled to a graphics processor 64 that may be coupled to a display 66 in one embodiment. The image encoder 10 may be part of the graphics processor 64, in one embodiment. Of course, other architectures may be used as well.

In some embodiments, the video compression storage 62 may store a look up table to determine an acceptability penalty for bit costing. However, in other embodiments, this table may be stored within the motion estimator 13 or the motion vector selector 14 shown in Figure 1.

In some embodiments, the components or sequences illustrated in Figure 3 may be implemented within the motion vector selector 14 in hardware in Figure 1. In other embodiments, they may be implemented in software, for example, stored as part of the video compression storage 62 shown in Figure 5.

**Claims**

1. A method of encoding, comprising:

   developing a plurality of motion vectors indicating relative movements of regions from a reference image frame to form a corresponding region in a second image frame to be encoded wherein each said region comprises a block;
   wherein said block is obtained by partitioning a 16x16 source block into blocks of size 16x16, 8x8, 4x8, 8x4 and 4x4, each of which corresponding to blocks of a particular partitioning and wherein motion vectors are developed for each block of each partitioning of said 16x16 source block;
   for each motion vector, developing a respective measure of distortion between corresponding blocks of the image frames;

   for each motion vector, developing a respective measure of bit cost of developing the motion vector;
   determining a maximum number of allowed motion vectors;
   said encoding method further comprising the steps of:

   a) for each of the first to the fourth 8x8 blocks of pixel data (40) of the 16x16 source block, pre-selecting one partitioning out of the two partitionings with two motion vectors using rate-distortion selection, and retaining three partitionings, said three partitionings comprising one partitioning with four motion vectors, corresponding to the partitioning of the 8x8 block into four 4x4 blocks, one partitioning with two motion vectors, corresponding to one of the partitionings into two 8x4 blocks or into two 4x8 blocks; and one partitioning with one motion vector, corresponding to the partitioning of the 8x8 block into one 8x8 block;
   b) combining the three retained partitionings of each of the groups consisting of the first and second 8x8 blocks and consisting of the third and fourth 8x8 blocks, respectively, wherein for each group when two or more of the obtained combinations of partitionings have the same total number of motion vectors, pre-selecting to keep only one partitioning with the same total number of motion vectors, such that six partitionings are retained for each group;
   c) combining the six retained partitionings of the two said groups, wherein when two or more of the obtained partitions have the same total number of motion vectors, pre-selecting to keep only one partitioning with the same total number of motion vectors;
   d) for the block of 16x16 pixel data pre-selecting one partitioning out of the two partitionings with two motion vectors and retaining two partitionings, said two partitionings comprising one partitioning with two motion vectors, corresponding to partitioning of the 16x16 block into two 8x16 blocks or into two 16x8 blocks and one partition with one motion vector, corresponding to the partioning of the 16x16 source block into one 16x16;

   using rate-distortion optimisation to select among all retained partitionings the partitioning which minimises said distortions and said costs to perform estimation, the number of motion vectors of the selected partitioning being less than the maximum number of motion vectors.

2. The method of claim 1 wherein distortion is determined after transforming data to a frequency domain.

3. The method of claim 2 including dividing said data into higher and lower frequency data and using only said lower frequency data to determine distortion, wherein the transform is a Haar-based wavelet transform.

4. An image encoder (10) comprising:

a memory (11); and

a motion estimator (13) coupled to said memory (11) and being adapted to develop a plurality of motion vectors indicating relative movements of regions from a reference image frame to form a corresponding region in a second image frame to be enclosed, wherein each said region comprises a block;

wherein said block is obtained by partitioning a 16x16 source block into blocks of size 16x16, 8x8, 4x8, 8x4 and 4x4, each of which corresponding to blocks of a particular partitioning and wherein motion vectors are developed for each block of each partitioning of said 16x16 source block;

for each motion vector to develop a measure of distortion between corresponding block of the image frames;

for each motion vector to develop a respective measure of bit cost of developing the motion vector;

to determine a maximum number of allowed motion vectors;

the motion estimator (13) being further adapted to:

a) for each of the first to the fourth 8x8 blocks of pixel data (40) of the 16x16 source block to pre-select one partitioning out of the two partitionings with two motion vectors using rate-distortion selection, and to retain three partitionings, said three partitionings comprising one partitioning with four motion vectors, corresponding to the partitioning of the 8x8 block into four 4x4 blocks, one partitioning with two motion vectors, corresponding to one of the partitionings into two 8x4 blocks or into two 4x8 blocks, and one partitioning with one motion vector, corresponding to thee partitioning of the 8x8 block into one 8x8 block;

b) to combine the three retained partitionings of each of the groups consisting of the first and second 8x8 blocks and consisting of the third and fourth 8x8 blocks, respectively, wherein for each group when two or more of the obtained combinations of partitionings have the same total number of motion vectors, pre-selecting to keep only one partitioning with the same total number of motion vectors, such that six partitionings are retained for eauch group;

c) to comine the six retained partitionings of two groups of the two groups, wherein when two or more of the obtained partitionings have the same total number of motion vectors, to pre-select to keep only one partitioning with the same total number of motion vectors;

d) for the second block of 16x16 pixel data to pre-select one partitioning out of the two partitionings with two motion vectors and retaining two partitionings, said two partitionings comprising one partitioning with two motion vectors, corresponding to partitioning of the 16x16 block into two 8x16 blocks or into two 16x8 blocks and one partition with one motion vector, corresponding to the partioning of the 16x16 source block into one 16x16;

to use rate-distortion optimisation to select among all retained partitionings the partitioning which minimises said distortions and said costs to perform motion estimation, the number of motion vectors of the selected partitioning being less than the maximum number of motion vectors.

5. The encoder (10) of claim 4, said encoder (10) being adapted to determine distortion after transforming data to a frequency domain.

6. The encoder (10) of claim 5, said encoder (10) being adapted to divide said data into higher and lower frequency data and use only said lower frequency data to determine distortion, wherein the transform is a Haar-based wavelet transform.

**Patentansprüche**

1. Verfahren zum Codieren, umfassend:

Entwickeln mehrerer Bewegungsvektoren, die Relativbewegungen von Bereichen aus einem Referenzbildrahmen anzeigen, um einen entsprechenden Bereich in einem zweiten zu codierenden Bildrahmen zu bilden, wobei jeder Bereich einen Block umfasst;

wobei der Block durch Unterteilen eines 16x16 Quellblocks in Blöcke der Größen 16x16, 8x8, 4x8, 8x4 und 4x4 erhalten wird, von denen jeder Blöcken einer bestimmten Unterteilung entspricht, und wobei Bewegungsvektoren für jeden Block jeder Unterteilung des 16x16 Quellblocks entwickelt werden;

für jeden Bewegungsvektor, Entwickeln eines entsprechenden Maßes einer Verzerrung zwischen entsprechenden Blöcken der Bilderrahmen;

für jeden Bewegungsvektor, Entwickeln eines entsprechenden Maßes der Bitkosten für die Entwicklung des Bewegungsvektors;

Bestimmen einer maximalen Anzahl von zulässigen Bewegungsvektoren; wobei das Codierungsverfahren ferner die folgenden Schritte umfasst:

a) für jeden der ersten bis vierten 8x8 Blöcke von Pixeldaten (40) des 16x16-Quellblocks, Vorselektieren einer Unterteilung aus den beiden Unterteilungen mit zwei Bewegungsvektoren unter Verwendung von Rate-Verzerrungsauswahl und Beibehalten von drei Unterteilungen, wobei die drei Unterteilungen eine Unterteilung mit vier Bewegungsvektoren umfassen, die der Unterteilung des 8x8-Blocks in vier 4x4-Blöcke entspricht, eine Unterteilung mit zwei Bewegungsvektoren, die einer der Unterteilungen in zwei 8x4-Blöcke oder in zwei 4x8-Blöcke entspricht; und eine Unterteilung mit einem Bewegungsvektor, entsprechend der Unterteilung des 8x8-Blocks in einen 8x8-Block;

b) Kombinieren der drei beibehaltenen Unterteilungen jeder der Gruppen, die aus den ersten und zweiten 8x8-Blöcken bzw. aus den dritten und vierten 8x8-Blöcken bestehen, wobei für jede Gruppe, wenn zwei oder mehr der erhaltenen Kombinationen von Unterteilungen die gleiche Gesamtzahl von Bewegungsvektoren aufweisen, eine Vorauswahl getroffen wird, um nur eine Unterteilung mit der gleichen Gesamtzahl von Bewegungsvektoren zu erhalten, so dass sechs Unterteilungen für jede Gruppe beibehalten werden;

c) Kombinieren der sechs beibehaltenen Unterteilungen der beiden Gruppen, wobei, wenn zwei oder mehr der beibehaltenen Unterteilungen die gleiche Gesamtzahl von Bewegungsvektoren aufweisen, eine Vorauswahl getroffen wird, um nur eine Unterteilung mit der gleichen Gesamtzahl von Bewegungsvektoren zu behalten;

d) für den Block von 16x16 Pixeldaten, die eine Unterteilung der beiden Unterteilungen mit zwei Bewegungsvektoren vorauswählen und zwei Unterteilungen beibehalten, wobei die beiden Unterteilungen eine Unterteilung mit zwei Bewegungsvektoren umfassen, die der Unterteilung des 16x16-Blocks in zwei 8x16 Blöcke oder in zwei 16x8 Blöcke und eine Unterteilung mit einem Bewegungsvektor entspricht, die der Unterteilung des 16x16-Quellblocks in einen 16x16 entspricht;

Verwenden der Optimierung der Rate-Verzerrung, um unter allen beibehaltenen Unterteilungen die Unterteilung auszuwählen, die die Verzerrungen und die Kosten für die Durchführung der Schätzung minimiert, wobei die Anzahl der Bewegungsvektoren der ausgewählten Unterteilung kleiner als die maximale Anzahl der Bewegungsvektoren ist.

2. Verfahren nach Anspruch 1, wobei die Verzerrung nach der Transformation von Daten in einen Frequenzbereich bestimmt wird.

3. Verfahren nach Anspruch 2, umfassend das Aufteilen der Daten in Daten mit höherer und niedrigerer Frequenz und das Verwenden nur der Daten mit niedrigerer Frequenz zum Bestimmen der Verzerrung, wobei die Transformation eine auf Haar basierende Wavelet-Transformation ist.

4. Bildcodierer (10), umfassend:

einen Speicher (11); und
einen Bewegungsschätzer (13), der mit dem Speicher (11) gekoppelt ist und angepasst ist, um mehrere Bewegungsvektoren zu entwickeln, die relative Bewegungen von Bereichen aus einem Referenzbildrahmen anzeigen, um einen entsprechenden Bereich in einem zweiten zu umschließenden Bildrahmen zu bilden, wobei jeder der Bereiche einen Block umfasst;
wobei der Block erhalten wird, indem ein 16x16 Quellblock in Blöcke der Größe 16x16, 8x8, 4x8, 8x4 und 4x4 unterteilt wird, von denen jeder Blöcken einer bestimmten Unterteilung entspricht, und worin Bewegungsvektoren für jeden Block jeder Unterteilung des 16x16 Quellblocks entwickelt werden;
für jeden Bewegungsvektor ein Maß für die Verzerrung zwischen dem entsprechenden Block der Bilderrahmen zu entwickeln;
für jeden Bewegungsvektor ein entsprechendes Maß an Bitkosten für die Entwicklung des Bewegungsvektors zu entwickeln;
eine maximale Anzahl von zulässigen Bewegungsvektoren zu bestimmen; wobei der Bewegungsschätzer (13) ferner angepasst ist um:

a) für jeden der ersten bis vierten 8x8 Pixel-Datenblöcke (40) des 16x16-Quellblocks eine Unterteilung aus den beiden Unterteilungen mit zwei Bewegungsvektoren unter Verwendung von Rate-Verzerrungsauswahl vorzuselektieren und drei Unterteilungen beizubehalten, wobei die drei Unterteilungen eine Unterteilung mit vier Bewegungsvektoren umfassen, entsprechend der Unterteilung des 8x8-Blocks in vier 4x4-Blöcke, eine Unterteilung mit zwei Bewegungsvektoren, entsprechend einer der Unterteilung in zwei 8x4-Blöcke oder in zwei 4x8-Blöcke, und eine Unterteilung mit einem Bewegungsvektor, entsprechend der Unterteilung des 8x8-Blocks in einen 8x8-Block;

b) die drei beibehaltenen Unterteilungen jeder der Gruppen, die aus den ersten und zweiten 8x8-Blöcken bestehen bzw. aus den dritten und vierten 8x8-Blöcken bestehen, zu kombinieren, wobei für jede Gruppe, wenn zwei oder mehr der erhaltenen Unterteilungen die gleiche Gesamtzahl von Bewegungsvektoren aufweisen, eine Vorauswahl getroffen wird, um nur eine Unterteilung mit der gleichen Gesamtzahl von Bewegungsvektoren zu erhalten, so dass sechs Unterteilungen für jede Gruppe beibehalten werden;

c) die sechs beibehaltenen Unterteilung von zwei Gruppen der beiden Gruppen zu kombinieren, wobei, wenn zwei oder mehr der erhaltenen Unterteilungen die gleiche Gesamtzahl von Bewegungsvektoren aufweisen, eine Vorauswahl getroffen wird, um nur eine Unterteilung mit der gleichen Gesamtzahl von Bewegungsvektoren zu behalten;

d) für den zweiten Block von 16x16 Pixel Daten, eine Unterteilung aus den beiden Unterteilungen mit zwei Bewegungsvektoren vorzuwählen und zwei Unterteilungen beizubehalten, wobei die beiden Unterteilungen eine Unterteilung mit zwei Bewegungsvektoren umfassen, die der Unterteilung des 16x16-Blocks in zwei 8x16 Blöcke oder in zwei 16x8 Blöcke und eine Unterteilung mit einem Bewegungsvektor entspricht, entsprechend der Unterteilung des 16x16-Quellblocks in einen 16x16;

Verwenden der Optimierung der Rate-Verzerrung, um unter allen beibehaltenen Unterteilungen die Unterteilung auszuwählen, die die Verzerrungen und die Kosten für die Durchführung der Bewegungsschätzung minimiert, wobei die Anzahl der Bewegungsvektoren der ausgewählten Unterteilung kleiner als die maximale Anzahl der Bewegungsvektoren ist.

5. Codierer (10) nach Anspruch 4, wobei der Codierer (10) angepasst ist, um Verzerrungen nach der Transformation von Daten in einen Frequenzbereich zu bestimmen.

6. Codierer (10) nach Anspruch 5, wobei der Codierer (10) angepasst ist, um die Daten in Daten höherer und niedrigerer Frequenz zu unterteilen und nur die Daten niedrigerer Frequenz zu verwenden, um eine Verzerrung zu bestimmen, wobei die Transformation eine Wavelet-Transformation auf Haar-Basis ist.

**Revendications**

1. Procédé d'encodage, comprenant :

le développement d'une pluralité de vecteurs de déplacement indiquant des mouvements relatifs de régions à partir d'une vue d'image de référence pour former une région correspondante dans une seconde vue d'image destinée à être encodée, dans lequel chaque dite région comprend un bloc ;

dans lequel ledit bloc est obtenu en partitionnant un bloc source 16x16 en blocs de taille 16x16, 8x8, 4x8, 8x4 et 4x4, chacun desquels correspondant à des blocs d'un partitionnement particulier, et dans lequel des vecteurs de déplacement sont développés pour chaque bloc de chaque partitionnement dudit bloc source 16x16 ;

pour chaque vecteur de déplacement, le développement d'une mesure respective de distorsion entre des blocs correspondants des vues d'image ;

pour chaque vecteur de déplacement, le développement d'une mesure respective de coût binaire du développement du vecteur de déplacement ;

la détermination d'un nombre maximum de vecteurs de déplacement permis ;

ledit procédé d'encodage comprenant en outre les étapes de :

a) pour chacun des blocs 8x8, du premier au quatrième, de données de pixel (40) du bloc source 16x16, la présélection d'un partitionnement parmi les deux partitionnements avec deux vecteurs de déplacement en utilisant une sélection taux-distorsion, et la retenue de trois partitionnements, lesdits trois partitionnements comprenant un partitionnement avec quatre vecteurs de déplacement, correspondant au partitionnement du bloc 8x8 en quatre blocs 4x4, un partitionnement avec deux vecteurs de déplacement, correspondant à un des partitionnements en deux blocs 8x4 ou en deux blocs 4x8 ; et un partitionnement avec un vecteur de déplacement, correspondant au partitionnement du bloc 8x8 en un bloc 8x8 ;

b) la combinaison des trois partitionnements retenus de chacun des groupes constitués des premier et deuxième blocs 8x8 et constitués des troisième et quatrième blocs 8x8, respectivement, dans lequel, pour chaque groupe, lorsque deux, ou plus, des combinations obtenues de partitionnements possèdent le même nombre total de vecteurs de déplacement, on procède à la présélection pour garder seulement un partitionnement avec le même nombre total de vecteurs de déplacement, de telle sorte que six partitionnements soient retenus pour chaque groupe ;

c) la combinaison des six partitionnements retenus des deux dits groupes, dans lequel lorsque deux, ou plus, des partitionnements obtenus possèdent le même nombre total de vecteurs de déplacement, on procède à la présélection pour garder seulement un partitionnement avec le même nombre total de vecteurs de déplacement ;

d) pour le bloc de 16x16 données de pixel, la présélection d'un partitionnement parmi les deux partitionnements avec deux vecteurs de déplacement et la retenue de deux partitionnements, lesdits deux partitionnements comprenant un partitionnement avec deux vecteurs de déplacement, correspondant au partitionnement du bloc 16x16 en deux blocs 8x16 ou en deux blocs 16x8 et un partitionnement avec un vecteur de déplacement, correspondant au partitionnement du bloc source 16x16 en un 16x16 ;

l'utilisation d'optimisation taux-distorsion pour sélectionner, parmi tous les partitionnements retenus, le partitionnement qui minimise lesdites distorsions et lesdits coûts pour réaliser une estimation, le nombre de vecteurs de déplacement du partitionnement sélectionné étant inférieur au nombre maximum de vecteurs de déplacement.

2. Procédé selon la revendication 1, dans lequel la distorsion est déterminée après la transformation de données en un domaine fréquentiel.

3. Procédé selon la revendication 2, incluant la division desdites données en données de fréquence plus élevée et plus basse et l'utilisation seulement desdites données de fréquence plus basse pour déterminer une distorsion, dans lequel la transformée est une transformée en ondelettes à base Haar.

4. Encodeur d'image (10), comprenant :

une mémoire (11) ; et

un estimateur de déplacement (13) couplé à ladite mémoire (11) et étant adapté pour développer une pluralité de vecteurs de déplacement indiquant des mouvements relatifs de régions à partir d'une vue d'image de référence pour former une région correspondante dans une seconde vue d'image destinée à être entourée, dans lequel chaque dite région comprend un bloc ;

dans lequel ledit bloc est obtenu en partitionnant un bloc source 16x16 en blocs de taille 16x16, 8x8, 4x8, 8x4 et 4x4, chacun desquels correspondant à des blocs d'un partitionnement particulier, et dans lequel des vecteurs de déplacement sont développés pour chaque bloc de chaque partitionnement dudit bloc source 16x16 ;

pour chaque vecteur de déplacement pour développer une mesure de distorsion entre un bloc correspondant des vues d'image ;

pour chaque vecteur de déplacement pour développer une mesure respective de coût binaire du développement du vecteur de déplacement ;

pour déterminer un nombre maximum de vecteurs de déplacement permis ;

l'estimateur de déplacement (13) étant en outre adapté :

a) pour chacun des blocs 8x8, du premier au quatrième, de données de pixel (40) du bloc source 16x16, pour présélectionner un partitionnement parmi les deux partitionnements avec deux vecteurs de déplacement en utilisant une sélection taux-distorsion, et pour retenir trois partitionnements, lesdits trois partitionnements comprenant un partitionnement avec quatre vecteurs de déplacement, correspondant au partitionnement du bloc 8x8 en quatre blocs 4x4, un partitionnement avec deux vecteurs de déplacement, correspondant à un des partitionnements en deux blocs 8x4 ou en deux blocs 4x8, et un partitionnement avec un vecteur de déplacement, correspondant au partitionnement du bloc 8x8 en un bloc 8x8 ;

b) pour combiner les trois partitionnements retenus de chacun des groupes constitués des premier et deuxième blocs 8x8 et constitués des troisième et quatrième blocs 8x8, respectivement, dans lequel, pour chaque groupe, lorsque deux, ou plus, des combinaisons obtenues de partitionnements possèdent le même nombre total de vecteurs de déplacement, on procède à la présélection pour garder seulement un partitionnement avec le même nombre total de vecteurs de déplacement, de telle sorte que six partitionnements soient retenus pour chaque groupe ;

c) pour combiner les six partitionnements retenus de deux groupes des deux groupes, dans lequel, lorsque deux, ou plus, des partitionnements obtenus possèdent le même nombre total de vecteurs de déplacement, on procède à la présélection pour garder seulement un partitionnement avec le même nombre total de vecteurs de déplacement ;

d) pour le second bloc de 16x16 données de pixel, pour présélectionner un partitionnement parmi les deux partitionnements avec deux vecteurs de déplacement et pour retenir deux partitionnements, lesdits deux partitionnements comprenant un partitionnement avec deux vecteurs de déplacement, correspondant au partitionnement du bloc 16x16 en deux blocs 8x16 ou en deux blocs 16x8 et un partitionnement avec un vecteur de déplacement, correspondant au partitionnement du bloc source 16x16 en un 16x16 ;

pour utiliser une optimisation taux-distorsion pour sélectionner, parmi tous les partitionnements retenus, le partitionnement qui minimise lesdites distorsions et lesdits coûts pour réaliser une estimation de déplacement, le nombre de vecteurs de déplacement du partitionnement sélectionné étant inférieur au nombre maximum de vecteurs de déplacement.

5. Encodeur (10) selon la revendication 4, ledit encodeur (10) étant adapté pour déterminer une distorsion après la transformation de données en un domaine fréquentiel.

6. Encodeur (10) selon la revendication 5, ledit encodeur (10) étant adapté pour diviser lesdites données en données de fréquence plus élevée et plus basse et utiliser seulement lesdites données de fréquence plus basse pour déterminer une distorsion, dans lequel la transformée est une transformée en ondelettes à base Haar.

FIG. 1

FIG. 2

FIG. 4

FIG. 3

FIG. 5